# EUROPEAN PATENT APPLICATION

(11) **EP 3 103 347 A1**
(43) Date of publication of application: **14.12.2016**
(21) Application number: 15020092.1
(22) Date of filing: 08.06.2015
(51) Int. Cl.: A22B 3/00

(54) **SYSTEM AND METHOD FOR TREATMENT OF ANIMALS**

(71) Applicant: Foodmate B.V., 3261 LK Oud-Beijerland (NL)
(72) Inventor: Van den Bos, Mattheus Henricus, 3261 LK Oud-Beijerland (NL)
(74) Representative: V.O.

(57) **Abstract**

A system and method for treatment, stunning for slaughter and/or destruction of animals, such as cattle, livestock, poultry and the like. The system comprises at least one holder configured to accommodate at least one animal. The system further comprises an elongated tunnel having an entrance and an exit. The system further comprises a treatment supply at least at or near the entrance of the tunnel. The treatment supply is configured to insert a treatment substance into either or both of the tunnel and the holder. The system further comprises a transporter extending through the tunnel. The transporter is configured to advance the at least one holder through the tunnel from the entrance towards the exit. The additional treatment supply is arranged anywhere in the tunnel, al least at or near the exit of the tunnel. The treatment supply is configured to insert the treatment substance or an additional treatment substance into at least the tunnel. The treatment supply comprises a supply of nitrogen bubbles forming the treatment substance or Nitrogen gas forming the treatment substance. The holder is oriented on the tunnel entrance. A holder discharge is oriented on the tunnel exit. The transporter comprises a casing configured to enclose the holder, during transport thereof over at least a porting of a distance between the entrance and the exit of the tunnel. The tunnel comprises a press configured to immobilize the at least one animal in the holder.

## Description

The present disclosure relates to a method of and a system for treatment, stunning, slaughter and/or destruction of animals, such as cattle, livestock, poultry and the like. In known configurations, the system may comprise of at least one holder configured to accommodate at least one animal.

In the prior art, for slaughter of animals, often electrocution is employed. Nowadays, this is considered unwanted. Alternatives are being investigated from the technical field of slaughter, but none has arisen as a viable possibility.

In other prior art, for destruction of sick or potentially infected animals, for instance chickens and other animals during an epidemic of bird flu or pigs after an outbreak of hoof and mouth disease or bovine cattle after an outbreak of mad cows disease, gassing has normally been employed. This technique is often referred to as hypoxia. Thereto, potentially dangerous toxic gases were used, such as argon, carbon, carbon monoxide, carbon dioxide etc. Apart from the dangers that these gases pose, when unintentionally released into the environment, the process is slow; it can sometimes take many minutes to effectively euthanize animals, for which this process causes prolonged agony. This is undesirable from a view point of animal welfare, but also from a view point of technical and/or commercial exploitation.

Admittedly, there is an alternative in the form of anoxia, which is based on nitrogen. Of the breathable air in our environment, approximately 78% is nitrogen and 21% is oxygen. Many processes and systems are freely available for separating nitrogen and/or oxygen out of environmental air. It is possible to effectively euthanize an animal within seconds, by subjecting it in an enclosed space where no Oxygen is.

Hypoxia and anoxia have a common disadvantage, that these processes are executed in *a* chamber, into which live animals are inserted, after which a door or gate is closed and gasses are inserted into the confined space, *the animals therein to effectively euthanize these animals*. Thereafter, the door or gate is opened for removal of carcasses. This process is unacceptably slow and laborious for slaughter, apart from concerns that could accompany hypoxia from being employed, based on the nature of the treatment substance, with which the animals are killed, which could pose a threat when unintentionally released into the environment.

Further, there is a need for a method and system to enable fast and accurate treatment of large groups of animals, which may be treated for the disease, for example, by administering treatment substances to the animals, without having to subject each individual animal manually to a process of administering the treatment substances to it.

Embodiments of the present disclosure relate to a method and system, designed to provide an improvement over each and every one of the above described prior art techniques, and to moreover also be in essence applicable in each and every one thereof.

According to the present disclosure, embodiments of the system exhibit the further features of: an elongate tunnel having an entrance and an exit; a treatment supply at least at or near the entrance of the tunnel, and configured to insert a treatment substance into either or both of the tunnel and the holder; a transporter extending through the tunnel and configured to advance the at least one holder through the tunnel from the entrance towards the exit. Also, embodiments of the method of treatment, slaughter and/or destruction of animals, such as cattle, livestock, poultry and the like, according to the present disclosure comprise the features of accommodating at least one animal in at least one holder; advancing the holder through an elongate tunnel from a tunnel entrance and a tunnel exit; and administering a treatment substance into either or both of the tunnel and the holder through a treatment supply at least at or near the entrance of the tunnel.

Such embodiments of the present disclosure can preferably be based on anoxia in view of the fact that this process is quick, although the present disclosure is by no means restricted to anoxia. According to the present invention, the tunnel can serve to confine whatever gases or treatment substances are employed for treatment or euthanasia of the animals, in conjunction with the transporter for advancing holders through the tunnel. However, in view of the fact that nitrogen tends to dissipate very quickly into the environment, and anoxia works best when nitrogen levels are highest, systems and methods according to the present disclosure lend themselves extremely well for any type of substance treatment. Preferably, the length of the tunnel is designed to correspond with a minimum stay of the animals in the confined environment comprising the treatment substance to achieve the desired effect, for example of euthanasia. However, simply administering non-lethal treatment substances to large groups of animals can in itself also be achieved very conveniently, using the system and the method according to the present disclosure.

Embodiments of the present disclosure may exhibit specific preferred features, aspects, elements or components, to which the present disclosure is by no means restricted or limited, which specific preferred features, aspects, elements or components will be described in more detail in the below embodiment description and/or which may be defined in selected appended dependent claims. For instance:
In a preferred embodiment according to the present disclosure, the system may comprise the features that an additional treatment supply is arranged at least at or near the exit of the tunnel, and configured to insert the treatment substance or an additional treatment substance into at least the tunnel at the exit thereof. Likewise, in a preferred embodiment according to the present disclosure, the method may comprise the features of administering the treatment substance or an additional treatment substance into at least the tunnel at least at or near the exit of the tunnel. In such embodiments the entrance and exit of the tunnel can be provided with supplies of treatment substances and/or additional treatment substances to enclose a distance there between, which may be entirely taken by the treatment substances and/or the additional treatment substances, to ensure that animals are subjected thereto over the full length between the treatment supply at or near the entrance and the additional treatment supply at or near the exit. Consequently, the treatment can be performed extremely effectively.

In a preferred embodiment according to the present disclosure, the system may comprise the features that the treatment supply comprises a supply of nitrogen bubbles forming the treatment substance. Likewise, in a preferred embodiment according to the present disclosure, the method may comprise the features of administering the treatment substance comprises supplying nitrogen bubbles. Effectively, in combination with the features of the appended independent claims, an automated system and industrially applicable method can be provided, based entirely on anoxia, which has eluded skilled people from both technical fields of animal slaughter and destruction for the longest time.

In a preferred embodiment according to the present disclosure, the system may comprise the features that a holder supply is oriented on the tunnel entrance, and/or a holder discharge is oriented on the tunnel exit. Likewise, in a preferred embodiment according to the present disclosure, the method may comprise the features of supplying the at least one holder to the tunnel entrance and/or discharging the at least one holder from the tunnel exit. Consequently, an automated system and/or industrially applicable process can be provided on the basis of repeated use of holders or containers for accommodating at least one animal, and repeatedly filling these holders or containers with animals to be treated before entry into the tunnel and removing treated animals after exit from the tunnel.

In a preferred embodiment according to the present disclosure, the system may comprise the features that the transporter comprises a casing configured to enclose the holder, during transport thereof over at least a portion of a distance between the entrance and the exit of the tunnel. Likewise, in a preferred embodiment according to the present disclosure, the method may comprise the features of encasing the at least one holder, during transport thereof over at least a portion of a distance between the entrance and the exit of the tunnel. In such embodiments of the present disclosure, the treatment substance based environment within the tunnel can be confined or restricted to the immediate surroundings of a holder or container, accommodating the at least one animal to be subjected to the treatment. Thereby, the amount of such treatment substance can be minimised in the effectiveness of the method and system can be optimised.

In a preferred embodiment according to the present disclosure, the system may comprise the features that the tunnel comprises a press configured to immobilize the at least one animal in the holder. Likewise, in a preferred embodiment according to the present disclosure, the method may comprise the features of pressing down the animal in the holder for immobilization thereof. It should be emphasised here that in mobilising or pressing down animals within their cages or holders or other containers is merely intended to ensure that the animals do not inflict any injury upon themselves. Even though embodiments of the present disclosure are as humane and based on considerations of animal well-being as much as possible, it cannot be excluded that some individual animals might exhibit a limited degree of anxiety. When this occurs, means for pressing down or in mobilising the animals can prevent harm or injury to come to them. For instance, an animal may flap its wings or kick its legs, which may be prevented in this manner, and consequently also wing break or leg break can also be avoided.

In a preferred embodiment according to the present disclosure, the system may comprise the features of at least one mobile frame, on which at least the tunnel with the treatment supply and the transporter are arranged. Likewise, in a preferred embodiment according to the present disclosure, the method may comprise the features of displacing an assembly of at least the tunnel with the treatment supply and the transporter to a destination or location of use. In such embodiments of the present disclosure, the system can be transported to a destination or location of the intended use, where the method can subsequently be executed in situ. Thereby, transport of the animals, which are sometimes diseased or infected, can be presented.

After the foregoing identification of embodiments of the present disclosure in more general terms ad expressions of the appended independent and dependent claims, below a description in more detail is provided of a limited number of embodiments that are shown in the appended drawings. It is noted here that none of these embodiments are to be considered limiting or restrictive on the scope of protection as defined in the appended claims. In the figures and the following description, identical or similar reference numbers can be used to designate the same or similar elements, components and/or aspects of embodiments of the present disclosure. In the drawing:
Figure 1 shows, in side view, a first embodiment according to the present disclosure; and
Figure 2 shows, in side view, the second embodiment according to the present disclosure.

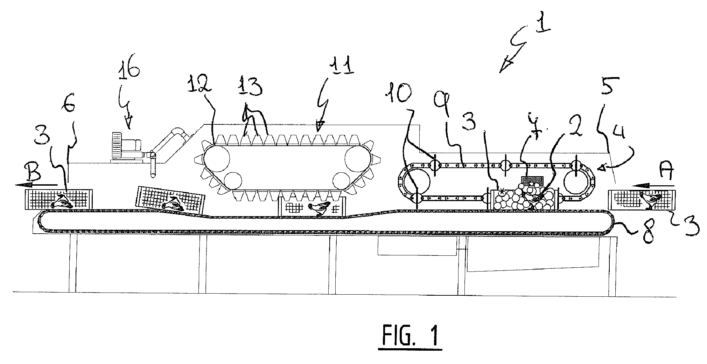

Figure 1 shows, in side view, a system 1 for treatment, slaughter and/or destruction of animals, such as cattle, live stock, poultry 2 and the like. The system 1 comprises at least one holder 3 configured to accommodate at least one animal 2. The system 1 further comprises an elongate tunnel 4 having an entrance 5 and an exit 6. Further, the system comprises a treatment supply 7 at least at or near the entrance 5 of the tunnel 4, which treatment supply is configured to insert a treatment substance into either or both of the tunnel 4 and the holder 3. Also, the system 1 comprises a transporter 8 extending through the tunnel 4 and configured to advance the at least one holder 3 through the tunnel 4 from the entrance 5 towards the exit 6.

In this respect it is noted that the treatment supply 7 can be configured to provide a barrier of for instance nitrogen bubbles at the entrance 5 of tunnel 4. The holders 3 can have the form of crates. When crate-shaped holders 3 containing at least one animal 2 move through such a nitrogen bubble barrier, animals 2 in crate-shaped holders 3 are enveloped very locally in an essentially nitrogen based environment. Any alternative treatment substance can likewise be provided at the entrance 5 of the tunnel 4 by the treatment supply 7. The treatment supply 7 can be configured to insert nitrogen bubbles only into holders 3 or crates, instead of laying a barrier of such nitrogen bubbles at entrance 5 of tunnel 4.

In addition, not shown in figure 1, the system according to the present disclosure may comprise an additional treatment supply at least at or near the exit 6 of the tunnel 4. Such an additional treatment supply can provide a second barrier of nitrogen bubbles at the exit 6 of tunnel 4 in addition a similar barrier at the entrance 5 of tunnel 4. Thus, such an additional treatment supply can be configured to insert the treatment substance or an additional treatment substance into at least the tunnel. Reference is made here to an additional treatment substance, because the treatment substance to be administered at the exit 6 of the tunnel 4 may be different from the treatment substance to be administered at the entrance 5 of the tunnel 4.

According to the embodiment of figure 1, the treatment supply may comprise a supply of nitrogen bubbles forming the treatment substance. It is not to be excluded thereby, that other treatment substances can additionally or alternatively be provided at the entrance 5 of tunnel 4.

According to the embodiment of figure 1, a holder supply is oriented on the tunnel entrance. Such a holder supply is schematically designated with arrow A, and is defined herein to be oriented on the tunnel entrance 5 since crates or holders 3 are furnished in the direction of arrow A to said entrance 5 of tunnel 4. Likewise, according to the embodiment of figure 1, a holder discharge is oriented on the tunnel exit 6. Such a holder discharge is schematically designated with arrow B, and is defined herein to be oriented on the tunnel exit 6 since crates or holders 3 are discharged in the direction of arrow B from said exit 6 of tunnel 4.

In the embodiment of figure 1, the transporter 8 comprises or is associated with a casing configured to enclose the holder 3, during transport thereof over at least a portion of a distance between the entrance 5 and the exit 6 of the tunnel 4. Such a casing is formed by a transporter 9 opposite transporter 8, relative to the path along which holders 3 are advanced through the tunnel 4. Extending from the transporter 9 are boards 10 at variable distances there between, to adapt transporter 9 and the casings defined by boards 10 to the dimensions of the holders or crates 3. More in particular, boards 10 are arranged to join or abut against a frontal and against a rear surface of holders or crates 3, relative to the direction of movement of the holders or crates 3, indicated by the assembly of arrows A and B. Side surfaces of the holders or crates 3 are only a short distance from inner walls of the tunnel 4. Consequently, with this arrangement and configuration, treatment substances can be easily inserted into holders or crates 3, from above, through a top surface, to insert for instance nitrogen bubbles at treatment supply 7.

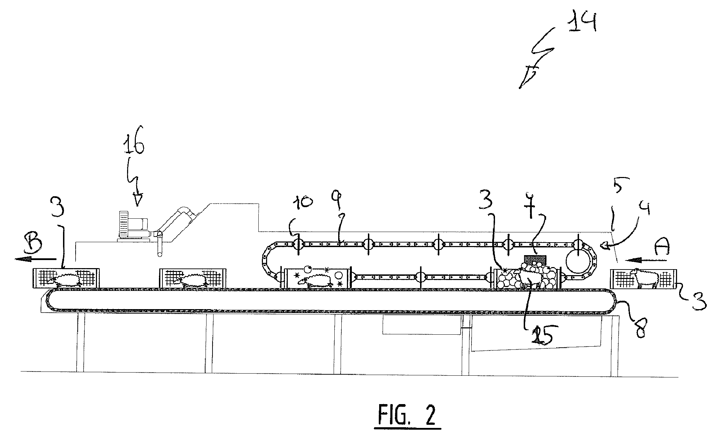

Further, in the embodiment of figure 1, the tunnel 4 comprises a press 11 configured to immobilize the at least one animal in the holder 3. The press 11 itself is formed by a transporter 12, carrying protrusions 13, which can be manufactured from a relatively soft material like rubber or plastic. Once a holder 3 or create has advanced past the transporter 9 that is equipped with boards 10 to define casings on, against or in holders 3 or crates, the holders 3 or crates arrive at the press 11. At such a time, the treatment substance will have begun to have an effect on the animals. To avoid panic or injury, protrusions 13 on transporter 12 of press 11 extend into the holders 3 or crates, as these holders 3 or crates move along the press over the transporter 8. By gently filling the space within the holders 3 or crates, using protrusions 13, flapping or kicking can effectively be avoided. The press 11 may extend over a considerable distance within the tunnel and along the inner length thereof, where preferably account is taken of the time needed for the animals to succumb. Likewise, the length of transporter 9, equipped with boards 10, can - if sufficiently long - already suffice to allow the animals to succumb, without the features of the press 11, as indicated in figure 2, which is an embodiment of the present disclosure without the press.

Moreover, in figure 2, a larger dimensioned system 14 is shown as an alternative embodiment of the present disclosure, from which the press 11 of the embodiment in figure 1 is omitted. Further, the system 14 in figure 2 is designed for larger animals, in this case sheep 15. These sheep are kept within the confines of accommodating crates or holders 3 over a longer distance defined by the transporter 9. When released from the transporter 9, the sheep are anticipated to have succumbed, obviating the need for press 11 or the like.

After the foregoing detailed description of embodiments of the present disclosure, it will be abundantly clear that a multitude of additional and/or alternative embodiments will force themselves upon the skilled person. By way of example, reference is made here to an additional or alternative embodiment, in which the system according to the present disclosure may further comprise the feature of at least one mobile frame, on which at least the tunnel with the treatment supply and the transporter are arranged. As a consequence of providing a mobile frame, the entire system becomes mobile and transportable, and can be transported to a location of use or other destination, where it can be set into operation, for instance for the destruction of sick or infected animals, or animals that are only suspected of being sick or infected, to avoid further spread of the disease. Thereby, any need is obviated for the animals to be transported to a system or a location of application of a method according to the present disclosure.

Tunnel 4 in either embodiment of figure 1 or figure 2 can comprise an exhaust 16, which may alternatively serve as means for supplying an additional barrier of the treatment substance or an additional treatment substance at the exit 6 of the tunnel 4. When intended to be operational as an exhaust, gases emanating from the tunnel can be captured thereby, for example to be recycled and/or reused.

As a potential embodiment of encasing holders 3, reference is made to transporter 9, that is equipped with boards 10. Additional boards on the sides of the crates can be provided, and even a top surface closing board over the top of the holders 3 or crates, in which the animals are accommodated. In fact, adding these components together will or can result in a configuration of a box turned upside down over the holder 3. Alternatively, the tunnel can simply be made to measure, which is to say small enough to accommodate just the width and height of a single holder 3. Thereby the need for encasing means can be obviated, in particular if barriers of nitrogen bubbles or other treatment substances at the entrance and exit of the tunnel are provided. It is again emphasised here, that embodiments of the present disclosure can relate to destruction or slaughter of animals, but also simply treatment for the benefit of these animals.

## Claims

1. A system for treatment, slaughter and/or destruction of animals, such as cattle, live stock, poultry and the like, the system comprising:
- at least one holder configured to accommodate at least one animal;
wherein the system further comprises:
- an elongate tunnel having an entrance and an exit;
- a treatment supply at least at or near the entrance of the tunnel, and configured to insert a treatment substance into either or both of the tunnel and the holder;
- a transporter extending through the tunnel and configured to advance the at least one holder through the tunnel from the entrance towards the exit.

2. The system according to claim 1, wherein an additional treatment supply is arranged at least at or near the exit of the tunnel, and configured to insert the treatment substance or an additional treatment substance into at least the tunnel.

3. The system according to claim 1 or 2, wherein the treatment supply comprises a supply of nitrogen bubbles forming the treatment substance.

4. The system according to claim 1, 2 or 3, wherein a holder supply is oriented on the tunnel entrance.

5. The system according to any or more of the preceding claims, wherein a holder discharge is oriented on the tunnel exit.

6. The system according to any or more of the preceding claims, wherein the transporter comprises a casing configured to enclose the holder, during transport thereof over at least a portion of a distance between the entrance and the exit of the tunnel.

7. The system according to any or more of the preceding claims, wherein the tunnel comprises a press configured to immobilize the at least one animal in the holder.

8. The system according to any or more of the preceding claims, further comprising at least one mobile frame, on which at least the tunnel with the treatment supply and the transporter are arranged.

9. A method of treatment, slaughter and/or destruction of animals, such as cattle, live stock, poultry and the like, the method comprising:
- accommodating at least one animal in at least one holder;
- advancing the holder through an elongate tunnel from a tunnel entrance and a tunnel exit; and
- administering a treatment substance into either or both of the tunnel and the holder through a treatment supply at least at or near the entrance of the tunnel.

10. The method according to claim 9, further comprising administering the treatment substance or an additional treatment substance into at least the tunnel at least at or near the exit of the tunnel.

11. The method according to claim 9 or 10, wherein administering the treatment substance comprises supplying nitrogen bubbles.

12. The method according to claim 9, 10 or 11, further comprising: supplying the at least one holder to the tunnel entrance and/or discharging the at least one holder from the tunnel exit.

13. The method according to any or more of the preceding claims 9 - 12, further comprising: encasing the at least one holder, during transport thereof over at least a portion of a distance between the entrance and the exit of the tunnel.

14. The method according to any or more of the preceding claims 9 - 13, further comprising pressing down the animal in the holder for immobilization thereof.

15. The method according to any or more of the preceding claims 9 - 14, further comprising displacing an assembly of at least the tunnel with the treatment supply and the transporter to a destination or location of use.
